# EUROPEAN PATENT SPECIFICATION

(11) **EP 1 615 808 B1**
(45) Date of publication and mention of the grant of the patent: **17.06.2009**
(21) Application number: 04728483.1
(22) Date of filing: 20.04.2004
(51) Int. Cl.: B60R 21/34

(54) **A SAFETY DEVICE**
SICHERHEITSVORRICHTUNG
DISPOSITIF DE SECURITE

(30) Priority: 24.04.2003 GB 0309308
(43) Date of publication of application: 18.01.2006
(73) Proprietor: AUTOLIV DEVELOPMENT AB, 447 83 Vargarda (SE)
(72) Inventor: HAGLUND, Lennart, S-447 32 Vargarda (SE)
(74) Representative: Parry, Simon James
(86) International application number: PCT/SE2004/000598
(87) International publication number: WO 2004/094203

(56) References cited:
- EP-A2- 1 293 400
- EP-A2- 1 295 763
- WO-A1-03/086826
- DE-A1- 10 116 717
- FR-A1- 2 833 222

## Description

**THE PRESENT INVENTION** relates to a safety device, and more particularly relates to a safety device to be mounted on a vehicle to provide protection for a pedestrian struck by the vehicle in an accident situation.

If a pedestrian is struck by a vehicle in an accident situation, the pedestrian may be thrown in such a way that the head or torso of the pedestrian impacts with the hood or bonnet of the motor vehicle. The hood or bonnet of the motor vehicle may deform as a consequence of such impact, but, if the hood or bonnet is closed, the hood or bonnet may only deform by a very short distance before the underside of the hood or bonnet will engage with part of the engine located under the hood or bonnet.

Consequently it has been proposed to provide a mechanism which, in response to the sensing of an impact with a pedestrian, partially raises the hood or bonnet of the vehicle. Thus, when the pedestrian impacts with the hood or bonnet, the hood or bonnet is able to deform over a substantial distance before the underside thereof engages with the engine. During this extensive deformation of the hood or bonnet, the head or torso of the pedestrian may be decelerated appropriately, relative to the vehicle, without substantial injury arising.

Various arrangements have been proposed to raise the rear part of the bonnet or hood in response to an accident situation involving an impact with a pedestrian. Typically, however, a bonnet or hood is raised for servicing purposes about hinges provided at the rear part of the bonnet. Consequently it has been necessary to devise special hinge arrangements which firstly enable the bonnet to be lifted in the normal way, about a pivot axis defined at the rear of the bonnet or hood by the hinges, and which secondly permit the rear part of the bonnet to be raised in an accident situation.

EP-A-0967128 discloses an arrangement of this type. In the embodiments described in this Specification, the rear part of the bonnet or hood is mounted on pivot pins which constitute hinge pins at the rear edge of the hood or bonnet. The pivot pins are received within a vertical channel having an enlarged lower part, one side-wall of the channel being defined by a member which is pivotally connected to the member defining the other side-wall of the channel, the pivotally mounted member being spring-biased so that the channel has a minimum width. The minimum width of the channel is less than the diameter of the pin, apart from in the lower part of the channel. Thus, the pin is retained within the lower part of the channel, but can be released from the channel when subjected to a substantial upward force, the pivotally mounted member defining said one side-wall, the channel then moving slightly against the spring-bias. An arrangement of this type may become disconnected if the rear of the hood or bonnet is subjected to a sudden upward force, for example when travelling along a very uneven road.

DE-A-19957872 discloses another arrangement in which the pivot point about which the hood or bonnet is hinged to the main part of a vehicle is itself provided at the free end of a pivotally mounted arm. In an initial position of the pivotally mounted arm, the hood or bonnet may be opened or closed in a conventional manner. However, in response to an accident situation, an actuator may move the pivotally mounted arm, thus raising the pivot point about which the rear part of the hood or bonnet is connected to the main part of the vehicle. As a consequence, the rear part of the hood or bonnet itself is lifted up. Such an arrangement is relatively complicated.

GB-A-2,354,797 discloses a further hinge arrangement in which the pivot point about which the bonnet usually pivots is connected to the main part of the car by means of a pivotally mounted arm. The pivotally mounted arm is held in a normal position by a catch member, but can pivot to a position in which the rear part of the hood or bonnet is raised, upon release of the catch member. The catch member is adapted to release itself whenever the rear part of the hood or bonnet is subjected to a substantial upward force. Again, an arrangement of this type may malfunction in that the rear part of the bonnet may rise if, for example, the vehicle is travelling along a very uneven road.

A further problem that may be encountered with the arrangements described in DE-A-19957872 and GB-A-2,354,797, is that the rear portion of the bonnet may be constrained to move substantially vertically upwardly. If the bonnet has a latch at the front which normally retains the bonnet in a closed position, that front latch may not permit such vertical movement of the rear part of the bonnet, unless a specially designed latch is provided which is permitted to move appropriately. If such a latch is provided, the consequent movement of the hood or bonnet may reveal hard parts of the underlying chassis in the region where the pedestrian may strike the car. Alternatively, of course, the latch may break if subjected to an over-large force.

Document DE-A-101 16 717 discloses a safety device according to the preamble of claim 1.

The present invention relates to a safety device of the type intended to lift a hood or bonnet in response to an accident situation involving an impact with a pedestrian.

According to this invention there is provided a safety device incorporating a releasable connection between a first component and a second component, the first component carrying a unit defining a chamber receiving a piston, the piston having a piston head received within the chamber and a piston rod extending from the piston head, an end part of the piston rod emerging from the chamber, the second component defining an aperture configured to receive the said end part of the piston rod, there being a gas generator unit to supply gas to the piston, the gas generator unit being mounted to supply gas to the end of the chamber remote from the piston rod, there being a gas flow duct extending from the gas generator unit to the face of the piston head remote from the gas generator unit, the safety device being such that on actuation of the gas generator unit the piston moves towards the end of the chamber remote from the piston rod, to withdraw the end part of the piston rod from the aperture.

Preferably the piston is provided with a hollow spigot extending, within the chamber, towards the end of the chamber remote from the piston rod, the hollow spigot forming part of a gas flow path extending from the gas generator unit to the face of the piston head remote from the gas generator unit.

Conveniently the spigot has a sliding fit within a sleeve provided within the chamber.

Preferably the gas generator unit is a pyrotechnic unit mounted at the end of the chamber remote from the piston rod.

Conveniently the unit defining the chamber is provided with a cylindrical extension, the first component being pivotally mounted to the cylindrical extension and being retained by means of a nut.

Preferably wherein a gas spring unit is additionally provided, the release of the second component enabling the gas spring to extend.

Conveniently the gas spring unit incorporates a cylinder containing gas under high pressure the cylinder being sealed by a rupturable seal, the rupturable seal communicating with a flow path leading to the atmosphere, the rupturable seal being configured to be ruptured when a pyrotechnic charge of the gas generator unit is actuated.

In order that the invention may be more readily understood, and so that further features thereof may be appreciated, the invention will now be described, by way of example, with reference to the accompanying drawings in which:
FIGURE 1 is an illustrative view of the rear part of a hood or bonnet illustrating a hinge arrangement incorporating a gas strut in an initial position,
FIGURE 2 is a view corresponding to Figure 1 showing the hood or bonnet opened in the conventional manner,
FIGURE 3 is a view corresponding to Figure 1 illustrating the hinge arrangement when opened as a consequence of an impact with a pedestrian,
FIGURE 4 is a sectional view of a combined gas strut and release pin for use in the embodiment of Figure 1, and
FIGURE 5 is a view of a conventional gas strut, for purposes of comparison.

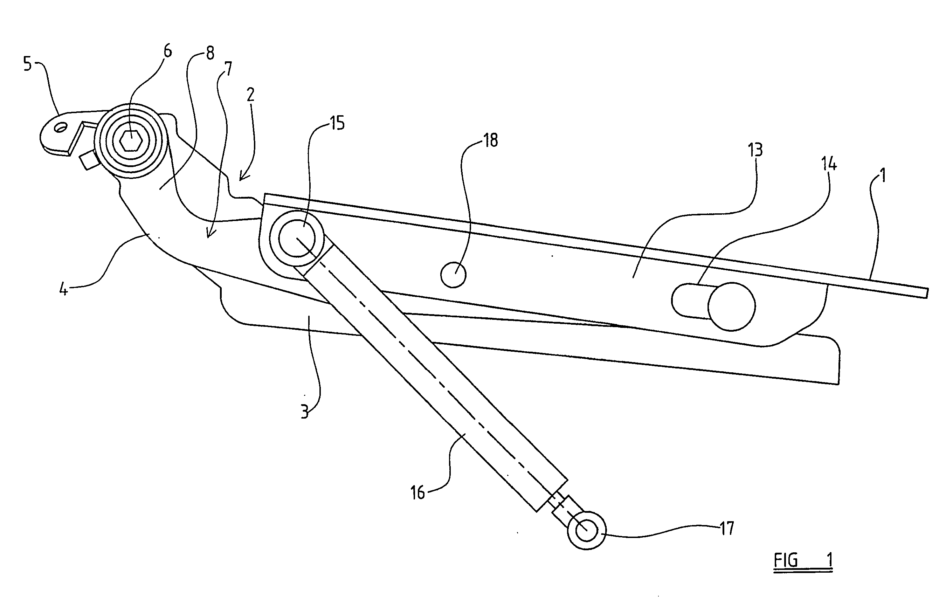

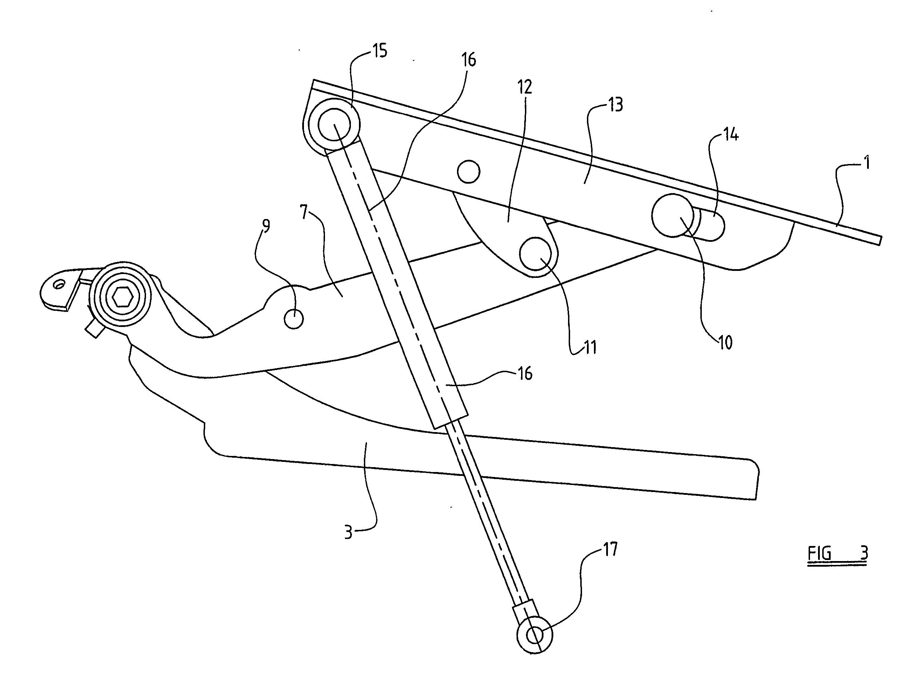

Referring initially to Figure 1 of the accompanying drawings, the rear part of the hood or bonnet 1 of a motor vehicle is illustrated. The hood or bonnet is connected to the underlying part of a vehicle by means of a hinge arrangement 2. The hinge arrangement 2 includes a lower mounting arm 3. The lower mounting arm 3 is of elongate form and is configured to be mounted to part of the motor vehicle in the region of the scuttle. The lower mounting arm has, at its rearward end, an upwardly extending portion 4, which may be provided with an additional mounting lug 5 to be connected to the vehicle, the upwardly extending portion 4 terminating with a pivotal connection 6 to an upper mounting arm 7. The upper mounting arm 7 is again of elongate form having, at its rearward end, an upwardly extending portion 8 which extends to the pivotal connection 6. As can be seen most clearly in Figure 3, at a point part way along its length, the upper mounting arm 7 is provided with an aperture 9. At its free end the upper mounting arm 7 is provided with a laterally extending pin 10 and, intermediate the aperture 9 and the pin 10, the upper mounting arm 7 is pivotally connected, by pivot 11, to a guide link 12.

A flange 13 depends from the rear part of the hood or bonnet at a position in the region of the mounting arms 3 and 7. At a forward end the flange 13 is provided with an elongate slot 14. The pin 10 carried at the free end of the upper mounting arm 7 extends through the slot 14 and is slideable along the slot 14.

At the other end of the flange 13, the flange is pivotally connected, by means of a connection 15, to one end of a gas spring unit 16, the lower end of which is connected to an anchoring point 17.

At a point between the slot 14 and the pivotal connection 15, the flange is provided with a pivotal connection 18 which connects the flange to the other end of the guide link 12.

When the bonnet is closed, or in the "normal" position, the components of the hinge arrangement as described will have the condition illustrated in Figure 1. The upper mounting arm 7 lies immediately adjacent or, indeed, partially overlapping the lower mounting arm 3. The pin 10 carried on the upper mounting arm 7 will be at the forward end of the slot 14. The gas spring unit 16 will be in a compressed contracted form, and is not able to increase in length.

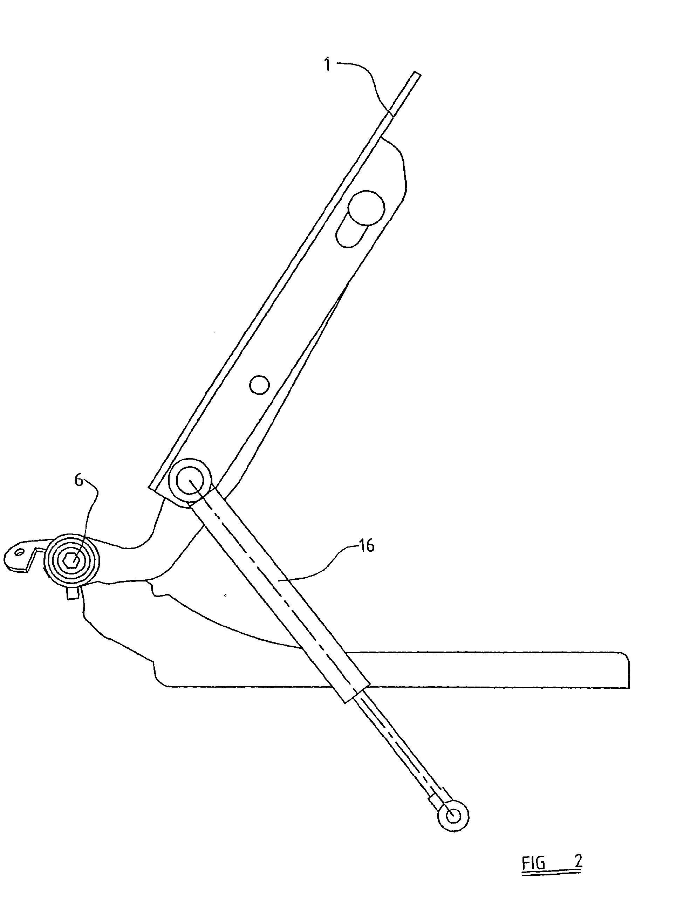

If the bonnet is to be opened in the normal way, to gain access to the engine, a catch at the very front of the bonnet is released and the forward part of the bonnet is moved upwardly. Thus the bonnet effects a pivotal movement about the transverse axis defined by the pivotal connection 6. The gas spring 16 will extend. The components will then have the relative condition shown in Figure 2.

Here it is to be mentioned that the gas spring unit 16, which will be described in greater detail below, is designed so that the length of the unit, when it is compressed, tends to increase. Thus the gas spring will help lift the bonnet. Also it is to be understood that the gas spring unit, in the embodiment of Figure 3, incorporates, in the region of the pivotal connection 15, a releasable locking element which locks the upper end of the gas spring, and thus the flange 13, to the aperture 9 formed in the upper mounting arm 7.

Thus, ordinarily, the upper mounting arm 7 and the flange 13 are secured together so that they can only move simultaneously and together. However, the gas spring unit 16 is configured so that, in response to a pedestrian impact, the gas spring unit 16 will release the releasable locking element and will then be able to increase in length to lift the rear part of the bonnet.

Thus, as can be seen from Figure 3, in response to a pedestrian impact, initially the connection between the upper mounting arm 7 and the combination of the gas spring unit 16 and flange 13 is broken, thus freeing the flange 13 to move relative to the upper mounting arm 7. The gas spring unit 16 is released and thus increases in length, and the rear part of the hood or bonnet is driven upwardly, with a consequence that the pin 10 provided at the free end of the upper mounting arm 7 moves along the slot 14 and the guide link 12 pivots relative to the upper mounting arm 7 and also relative to the flange 13 to provide a guiding function. The end result is that the bonnet 1 is moved to a position in which the rear part of the bonnet is elevated, the bonnet having pivoted about a virtual pivot axis defined by the conventional catch provided at the front of the bonnet. Because the bonnet is raised in this way, should the head or torso of the pedestrian impact with the bonnet, the bonnet may deform by a substantial distance, whilst retarding the head or torso of the pedestrian, before impacting with the engine block which is mounted beneath the bonnet 1.

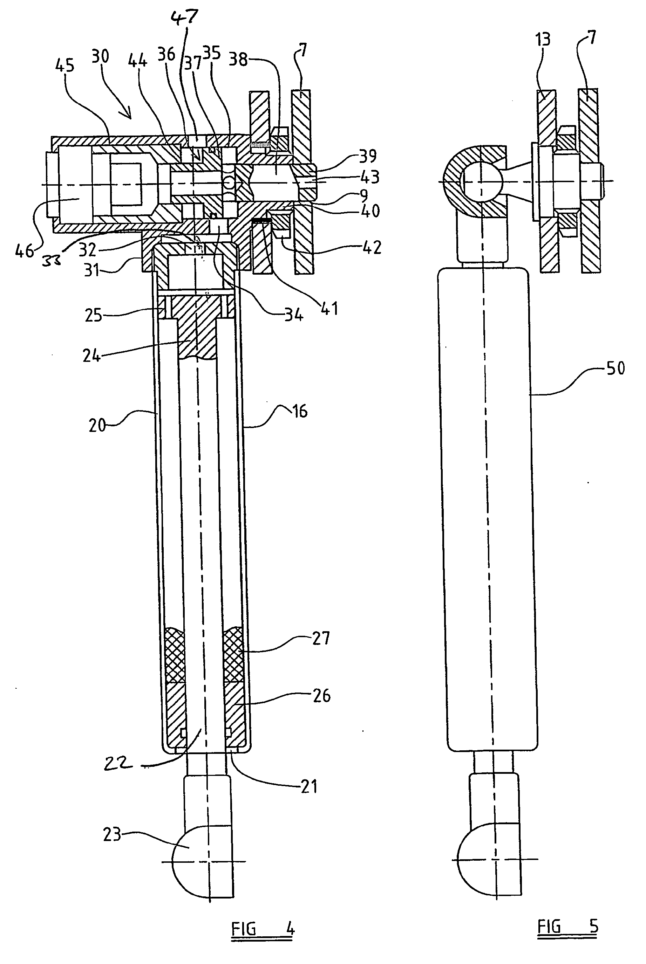

Turning now to Figure 4, the gas spring unit 16 is shown in cross-sectional view.

The gas spring unit 16 incorporates many components which are found in a conventional gas spring. The gas spring unit defines an elongate cylindrical housing 20, the lower end of which defines an aperture 21. A piston rod 22 passes through the aperture 21 extending into the cylindrical housing 20. The lower end of the piston rod 22 is provided with a connector 23 to be connected to the anchoring point 17. The upper end of the piston rod 22 is provided with a piston head 24, the piston head being provided with a plurality of gas flow passages 25 therethrough. The piston head 24 is a sliding fit within the cylindrical housing 20. Within the interior of the cylindrical housing 20 adjacent the aperture 21, a gas-tight seal 26 is provided. The cylinder initially contains a compressed gas at a pressure of, typically, 15 MPa to 20 MPa (150 to 200 bar), and may contain a damping fluid or oil 27 shown adjacent the lower seal 26. The components of the gas spring unit 16 as described above are conventional.

The gas spring unit 16 illustrated in Figure 4 is shown in a compressed state. Gas within the cylindrical housing 20 will act on the entire upper face of the piston head 24, but can only act on that part of the lower face of the piston head 24 which surrounds the piston rod 22. Thus the high pressure gas acts on a much larger surface area of the upper face of the piston head 24 than of the lower face of the piston head 24. Thus the pressurised gas exerts a down force on the piston head 24 tending to drive the piston rod 22 out of the cylindrical housing 20. Thus, should the gas spring be released from its compressed condition illustrated in Figure 4, it will tend to extend as a consequence of the differential forces applied to the piston head 24 by the compressed gas. The gas spring can be re-compressed by the application of an appropriate force tending to compress the gas spring, the spring returning to its initial condition. Whenever the spring changes condition gas flows through the gas flow passages 25.

The gas spring unit shown in Figure 4 is provided, at its upper end with a connector or actuator unit 30, mounted on the upper end of the cylindrical housing 20. The connector and actuator unit 30 has a plug 31 received as a gas-tight fit within the upper end of the cylindrical housing 20. The plug defines a gas flow duct 32 which is initially sealed by means of a rupturable membrane 33. The membrane serves to seal the gas flow duct from the interior of the housing 20. The gas flow duct 32 leads to an inlet port 34 of a cylindrical chamber 35. Contained within the chamber 35 is a piston element 36, the piston element 36 having a piston head 37 which is a sliding fit within the chamber 35. Extending from the piston head is a piston rod 38 having a terminal portion 39 which extends from a projecting portion 40 of the housing forming the connector and actuator unit 30. The projecting portion 40 of the housing is of cylindrical form and passes through an appropriate aperture formed in the flange 13 provided on the bonnet 1. An appropriate bush or washer 41, for example of a self-lubricating material, is provided between the housing portion and the flange 13. A retaining nut 42 is provided on a terminal threaded part of the projecting portion 40 of the housing. As shown in Figure 4 the end part 39 of the piston rod 38 extends through the aperture 9 formed in the upper mounting arm 7.

The piston 36 is provided with a gas flow passage 43 which extends from the end face of the end portion 39 of the piston rod 38 to a point immediately adjacent the piston head 37. A further gas flow duct extends from a point adjacent the piston head 37, through the piston head and through a tubular spigot 44 which extends in the opposite direction to the piston rod 38, the spigot 44 being received as a sliding fit within a sleeve 45, a pyrotechnic unit 46 being connected to the other end of the sleeve. A vent port 47 is provided in the side-wall of the cylinder in which the piston 36 moves, between the piston head 37 and the sleeve 45.

It is to be appreciated that when the pyrotechnic unit 46 is actuated, gas from the pyrotechnic unit will flow through the sleeve 45 and then through the tubular spigot 44, then being injected into the small space remaining between the piston head 37 of the piston 36 and the end of the chamber in which the piston moves. The high pressure gas will flow through the inlet port 34 and the gas flow duct 32 thus rupturing rupturable membrane 33. Also the gas will act on the piston head 37 tending to move the piston towards the left as shown. Thus the piston will move towards the gas generator with the spigot 44 sliding within the sleeve 45. Any gas initially trapped between the piston head 37 and the sleeve 45 may exit through the vent port 47.

As the piston moves towards the left so the end part 39 of the piston rod 38 is withdrawn from the aperture 9 formed in the upper mounting arm 7, thus effecting release of the upper mounting arm 7. The gas spring is then free to expand. However, because the rupturable membrane 33 has been ruptured, gas may flow from the gas spring, through the gas flow passage 32 and the gas flow passage 34, then flowing through the gas flow passage 43 formed in the piston, to escape to atmosphere. Thus the pressure of gas within the gas spring will be reduced, enabling the bonnet to return, relatively rapidly, to its initial position.

Figure 5 is provided simply for purposes of comparison and shows a conventional gas spring 50, not in accordance with the invention, which is permanently connected to a combination of the flange 13 and the upper mounting arm 7.

It is thus to be appreciated that a hinge arrangement of the type shown may be utilised with an "ordinary" gas spring which does not provide the release effect in the event that there is an impact with a pedestrian. This may facilitate the mass manufacture of motor vehicles since a uniform hinge arrangement may be used, that hinge arrangement being used selectively either with a gas spring which incorporates a connector and actuator arrangement as shown in Figure 4, or with a conventional gas spring 50 as shown in Figure 5.

In the present Specification "comprises" means "includes or consists of" and "comprising" means "including or consisting of".

## Claims

1. A safety device incorporating a releasable connection between a first component (13) and a second component (7), wherein the first component (13) carries a unit (30) defining a chamber (35) receiving a piston (36), the piston (36) having a piston head (37) received within the chamber (35) and a piston rod (38) extending from the piston head (37), an end part (39) of the piston rod (38) emerging from the chamber, and wherein a gas generator unit (46) supplies gas to the piston (36), **characterised in that** the second component (7) defines an aperture (9) configured to receive the said end part (39) of the piston rod (38) the gas generator unit (46) being mounted to supply gas to the end of the chamber (35) remote from the piston rod (38), there being a gas flow duct extending from the gas generator unit (46) to the face of the piston head (37) remote from the gas generator unit (46), the safety device being such that on actuation of the gas generator unit (46) the piston (36) moves towards the end of the chamber (35) remote from the piston rod (38), to withdraw the end part (39) of the piston rod (38) from the aperture (9).

2. A safety device according to Claim 1 wherein the piston (36) is provided with a hollow spigot (44) extending, within the chamber (35), towards the end of the chamber (35) remote from the piston rod (38), the hollow spigot (44) forming part of a gas flow path extending from the gas generator unit (46) to the face of the piston head (37) remote from the gas generator unit (46).

3. A safety device according to Claim 2 wherein the spigot (44) has a sliding fit within a sleeve (45) provided within the chamber.

4. A safety device according to Claim 2 or 3 wherein the gas generator unit (46) is a pyrotechnic unit mounted at the end of the chamber (35) remote from the piston rod (38).

5. A safety device according to any one the preceding Claims wherein the unit (30) defining the chamber (35) is provided with a cylindrical extension (40), the first component (13) being pivotally mounted to the cylindrical extension (40) and being retained by means of a nut (42).

6. A safety device according to any one of the preceding Claims wherein a gas spring unit (16) is additionally provided, the release of the second component (7) enabling the gas spring to extend.

7. A safety device according to Claim 6 wherein the gas spring unit (16) incorporates a cylinder (20) containing gas under high pressure, the cylinder (20) being sealed by a rupturable seal (33), the rupturable seal (33) communicating with a flow path (32, 34, 43) leading to the atmosphere, the rupturable seal (33) being configured to be ruptured when a pyrotechnic charge of the gas generator unit (46) is actuated.

## Patentansprüche

1. Sicherheitsvorrichtung, die eine lösbare Verbindung zwischen einer ersten Komponente (13) und einer zweiten Komponente (7) einschließt, wobei die erste Komponente (13) eine Einheit (30) trägt, die eine Kammer (35) zum Aufnehmen eines Kolbens (36) definiert, wobei der Kolben (36) einen Kolbenkopf (37), der in der Kammer (35) aufgenommen wird, und eine Kolbenstange (38) hat, die von dem Kolbenkopf (37) aus verläuft, wobei ein Endstück (39) der Kolbenstange (38) aus der Kammer hervortritt und wobei eine Gasgeneratoreinheit (46) Gas an den Kolben (36) liefert, **dadurch gekennzeichnet, dass** die zweite Komponente (7) eine Öffnung (9) definiert, die zum Aufnehmen des Endstücks (39) der Kolbenstange (38) konfiguriert ist, die Gasgeneratoreinheit (46) so befestigt ist, dass sie Gas an das Ende der Kammer (35) liefert, das sich entfernt von der Kolbenstange (38) befindet, wobei es einen Gasströmungskanal gibt, der von der Gasgeneratoreinheit (46) zur Stirnfläche des Kolbenkopfs (37) verläuft, die sich entfernt von der Gasgeneratoreinheit (46) befindet, wobei die Sicherheitsvorrichtung in einer solchen Weise ausgeführt ist, dass sich bei Betätigung der Gasgeneratoreinheit (46) der Kolben (36) auf das Ende der Kammer (35) zu bewegt, das sich entfernt von der Kolbenstange (38) befindet, um das Endstück (39) der Kolbenstange (38) aus der Öffnung (9) herauszuziehen.

2. Sicherheitsvorrichtung gemäß Anspruch 1, wobei der Kolben (36) mit einem hohlen Zapfen (44) versehen ist, der innerhalb der Kammer (35) in Richtung des Endes der Kammer (35) verläuft, das sich entfernt von der Kolbenstange (38) befindet, wobei der hohle Zapfen (44) Bestandteil eines Gasströmungswegs ist, der von der Gasgeneratoreinheit (46) bis zur Stirnfläche des Kolbenkopfs (37) verläuft, die sich entfernt von der Gasgeneratoreinheit (46) befindet.

3. Sicherheitsvorrichtung gemäß Anspruch 2, wobei der Zapfen (44) einen Gleitsitz innerhalb einer Buchse (45) hat, die in der Kammer vorgesehen ist.

4. Sicherheitsvorrichtung gemäß Anspruch 2 oder 3, wobei die Gasgeneratoreinheit (46) eine pyrotechnische Einheit ist, die am Ende der Kammer (35) montiert ist, das sich entfernt von der Kolbenstange (38) befindet.

5. Sicherheitsvorrichtung gemäß einem der vorherigen Ansprüche, wobei die Einheit (30), welche die Kammer (35) definiert, mit einer zylindrischen Erweiterung (40) versehen ist, wobei die erste Komponente (13) drehgelenkig an der zylindrischen Erweiterung (40) befestigt ist und mit Hilfe einer Schraubenmutter (42) gehalten wird.

6. Sicherheitsvorrichtung gemäß einem der vorherigen Ansprüche, wobei eine Gasfedereinheit (16) zusätzlich vorgesehen ist, wobei das Lösen der zweiten Komponente (7) das Ausfahren der Gasfeder ermöglicht.

7. Sicherheitsvorrichtung gemäß Anspruch 6, wobei die Gasfedereinheit (16) einen Zylinder (20) einschließt, der Gas unter hohem Druck enthält, wobei der Zylinder (20) durch eine zerreißbare Dichtung (33) abgedichtet ist, die zerreißbare Dichtung (33) mit einem Strömungsweg (32, 34, 43) kommuniziert, der in die Atmosphäre führt, wobei die zerreißbare Dichtung (33) so konfiguriert ist, dass sie zerrissen wird, wenn eine pyrotechnische Ladung der Gasgeneratoreinheit (46) gezündet wird.

## Revendications

1. Un dispositif de sécurité incorporant une connexion libérable entre un premier composant (13) et un deuxième composant (7), où le premier composant (13) porte une unité (30) définissant une chambre (35) recevant un piston (36), le piston (36) ayant une tête de piston (37) reçue à l'intérieur de la chambre (35) et une tige de piston (38) s'étendant de la tête de piston (37), une partie d'extrémité (39) de la tige de piston (38) émergeant de la chambre, et où une unité génératrice de gaz (46) fournit du gaz au piston (36), **caractérisé en ce que** le deuxième composant (7) définit une ouverture (9) configurée pour recevoir ladite partie d'extrémité (39) de la tige de piston (38), l'unité génératrice de gaz (46) étant montée pour fournir du gaz à l'extrémité de la chambre (35) distante de la tige de piston (38), une conduite d'écoulement de gaz s'y trouvant s'étendant de l'unité génératrice de gaz (46) à la face de la tête de piston (37) distante de l'unité génératrice de gaz (46), le dispositif de sécurité étant de telle sorte qu'à l'actionnement de l'unité génératrice de gaz (46) le piston (36) se déplace vers l'extrémité de la chambre (35) distante de la tige de piston (38), pour retirer la partie d'extrémité (39) de la tige de piston (38) de l'ouverture (9).

2. Un dispositif de sécurité selon la revendication 1 où le piston (36) est muni d'un ergot creux (44) s'étendant, à l'intérieur de la chambre (35), vers l'extrémité de la chambre (35) distante de la tige de piston (38), l'ergot creux (44) faisant partie d'une trajectoire d'écoulement de gaz s'étendant de l'unité génératrice de gaz (46) à la face de la tête de piston (37) distante de l'unité génératrice de gaz (46).

3. Un dispositif de sécurité selon la revendication 2 où l'ergot (44) a un ajustement coulissant à l'intérieur d'un manchon (45) fourni à l'intérieur de la chambre.

4. Un dispositif de sécurité selon la revendication 2 ou 3 où l'unité génératrice de gaz (46) est une unité pyrotechnique montée à l'extrémité de la chambre (35) distante de la tige de piston (38).

5. Un dispositif de sécurité selon n'importe laquelle des revendications précédentes où l'unité (30) définissant la chambre (35) est munie d'une extension cylindrique (40), le premier composant (13) étant monté sur l'extension cylindrique (40) de façon à pouvoir pivoter et étant retenu au moyen d'un écrou (42).

6. Un dispositif de sécurité selon n'importe laquelle des revendications précédentes où une unité de source de gaz (16) est fournie de façon additionnelle, la libération du deuxième composant (7) permettant à la source de gaz de s'étendre.

7. Un dispositif de sécurité selon la revendication 6 où l'unité de source de gaz (16) incorpore un cylindre (20) contenant du gaz sous haute pression, le cylindre (20) étant fermé hermétiquement par une fermeture hermétique pouvant être rompue (33), la fermeture hermétique pouvant être rompue (33) communiquant avec une trajectoire d'écoulement (32, 34, 43) menant à l'atmosphère, la fermeture hermétique pouvant être rompue (33) étant configurée pour être rompue quand une charge pyrotechnique de l'unité génératrice de gaz (46) est actionnée.
